# FASCICULE DE BREVET EUROPEEN

(11) **EP 4 253 247 B1**
(45) Date de publication et mention de la délivrance du brevet: **24.07.2024**
(21) Numéro de dépôt: 23158321.2
(22) Date de dépôt: 23.02.2023
(51) Int. Cl.: B64D 27/24

(54) **ENSEMBLE DE PROPULSION ÉLECTRIQUE COMPACT COMPORTANT UNE ATTACHE MOTEUR ISOSTATIQUE, AÉRONEF COMPORTANT AU MOINS UN TEL ENSEMBLE DE PROPULSION ÉLECTRIQUE**
KOMPAKTE ELEKTRISCHE ANTRIEBSANORDNUNG MIT ISOSTATISCHER MOTORBEFESTIGUNG, FLUGZEUG MIT MINDESTENS EINER SOLCHEN ELEKTRISCHEN ANTRIEBSANORDNUNG
COMPACT ELECTRIC PROPULSION ASSEMBLY COMPRISING AN ISOSTATIC MOTOR ATTACHMENT, AIRCRAFT COMPRISING AT LEAST ONE SUCH ELECTRIC PROPULSION ASSEMBLY

(30) Priorité: 11.03.2022 FR 2202124
(43) Date de publication de la demande: 04.10.2023
(73) Titulaire: AIRBUS OPERATIONS (S.A.S.), 31060 Toulouse (FR)
(72) Inventeur: AMARGIER, Rémi, 31060 TOULOUSE Cedex 9 (FR); FUKASAKU, Kotaro, 31060 TOULOUSE Cedex 9 (FR)
(74) Mandataire: Airbus-OPS SAS

(56) Documents cités:
- WO-A1-2021/140294
- FR-A1- 3 097 201
- GB-A- 2 010 969

## Description

La présente demande se rapporte à un ensemble de propulsion électrique compact comportant une attache moteur isostatique ainsi qu'à un aéronef comportant au moins un tel ensemble de propulsion électrique.

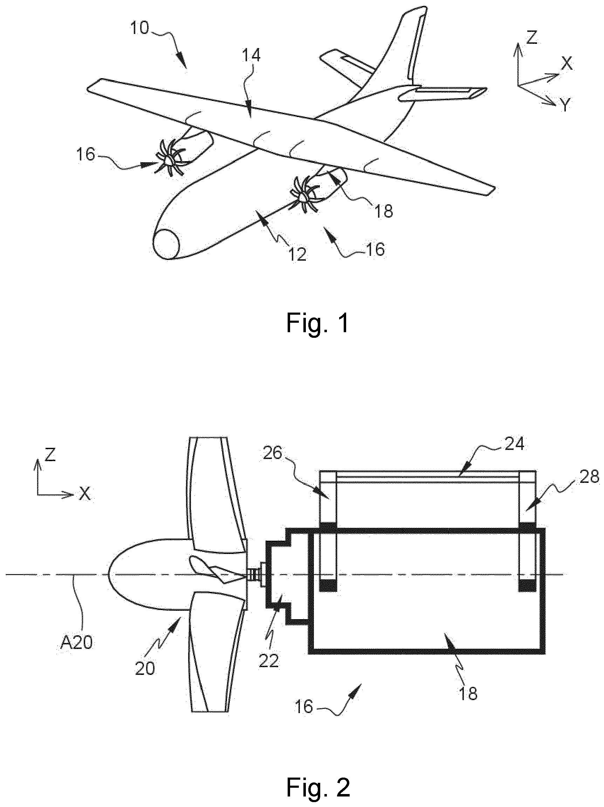

Selon un mode de réalisation visible sur la figure 1, un aéronef 10 comprend un fuselage 12, au moins une voilure 14 reliée au fuselage 12 ainsi que des ensembles de propulsion 16 reliés à la voilure 14 et disposés de part et d'autre du fuselage 12.

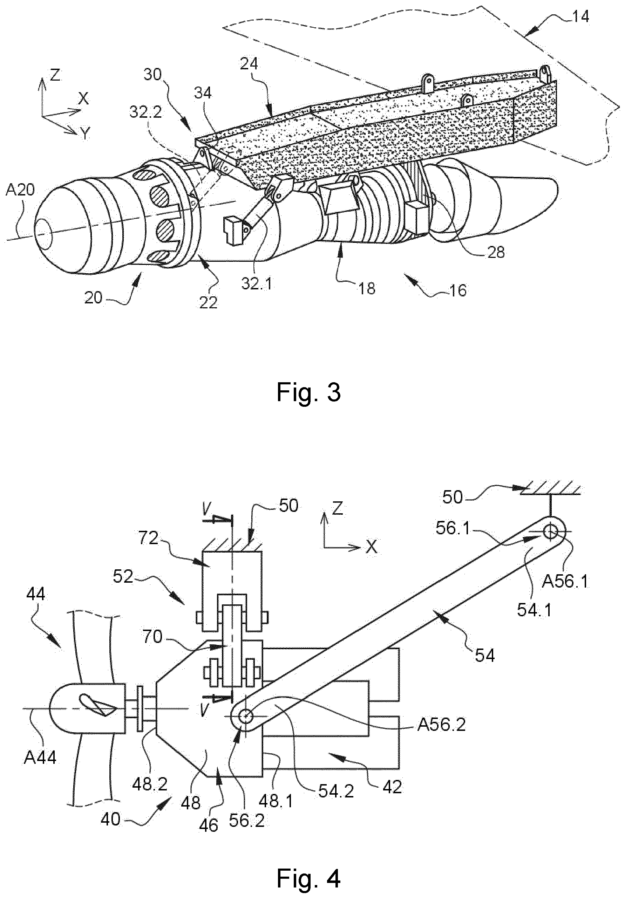

Comme illustré sur les figures 2 et 3, chaque ensemble de propulsion 16 comprend un moteur 18, une hélice 20 présentant un axe de rotation A20, une boîte de vitesse 22 reliant le moteur 18 et l'hélice 20 ainsi qu'une structure primaire 24 reliant le moteur 18 et la boîte de vitesse 22 à la voilure 14.

Pour la suite de la description, une direction longitudinale X est parallèle à l'axe de rotation A20 de l'hélice 20. Un plan longitudinal contient l'axe de rotation A20. Un plan transversal est perpendiculaire à la direction longitudinale X. Une direction transversale horizontale Y est perpendiculaire à la direction longitudinale X et orientée horizontalement. Une direction transversale verticale Z est perpendiculaire à la direction longitudinale X et orientée verticalement. Les notions « avant » et « arrière » font référence au sens d'écoulement de l'air par rapport à l'aéronef en vol, l'air s'écoulant de l'avant vers l'arrière.

Dans le cas d'un moteur thermique ou d'une turbomachine, le moteur 18 comprend un corps structurel apte à transmettre des d'efforts, comme les efforts de poussée générés par l'hélice 20 par exemple.

Selon un premier mode de réalisation visible sur la figure 2, le moteur 18 est relié à la structure primaire 24 par une attache moteur qui comprend une attache moteur avant 26 sous la forme d'un arçon avant relié d'une part à la structure primaire 24 et d'autre part à une zone avant du moteur 18 par plusieurs interfaces positionnées dans un premier plan transversal ainsi qu'une attache moteur arrière 28 sous la forme d'un arçon arrière relié d'une part à la structure primaire 24 et d'autre part à une zone arrière du moteur 18 par plusieurs interfaces positionnées dans un deuxième plan transversal.

Les premier et deuxième plans transversaux sont les plus espacés possible pour assurer une reprise optimale des charges inertielles et/ou des moments induits par l'hélice 20 ainsi que des efforts orientés selon les directions transversales horizontale et verticale Y et Z.

Ce premier mode de réalisation, adapté pour les moteurs thermiques ou les turbomachines, ne l'est pas pour les moteurs électriques qui sont plus compacts et ne disposent pas de points de fixation espacés selon la direction longitudinale X.

Selon un deuxième mode de réalisation visible sur la figure 3, l'attache moteur comprend une attache moteur avant 30 reliée d'une part à la structure primaire 24 et d'autre part à une zone avant du moteur 18 ainsi qu'une attache moteur arrière 28 sous la forme d'un arçon arrière relié d'une part à la structure primaire 24 et d'autre part à une zone arrière du moteur 18 par plusieurs interfaces positionnées dans un deuxième plan transversal. L'attache moteur arrière 28 peut être sensiblement identique à celle du premier mode de réalisation. L'attache moteur avant 30 comprend deux bielles 32.1, 32.2 disposées de part et d'autre du plan longitudinal vertical ainsi qu'une liaison longitudinale 34 positionnée dans le plan longitudinal vertical. Chaque bielle 32.1, 32.2 présente une première extrémité reliée à la structure primaire 24 par une première liaison présentant au moins un axe de pivotement, qui peut être parallèle à la direction transversale horizontale Y, ainsi qu'une deuxième extrémité reliée au moteur 18 par une première liaison présentant au moins un axe de pivotement parallèle à la direction transversale horizontale Y. La liaison longitudinale 34 comprend au moins un axe de pivotement parallèle à la direction longitudinale X et n'est pas configurée pour assurer la reprise des efforts de poussée orientés selon la direction longitudinale X.

Comme pour le premier mode de réalisation, le deuxième mode de réalisation, adapté pour les moteurs thermiques ou les turbomachines, ne l'est pas pour les moteurs électriques qui sont plus compacts et ne disposent pas de points de fixation espacés selon la direction longitudinale X

Le document FR 3 097 201 décrit un exemple de fixation de moteur électrique sur une structure d'aéronef.

La présente invention vise à remédier à tout ou partie des inconvénients de l'art antérieur. A cet effet, l'invention a pour objet un ensemble de propulsion d'un aéronef comportant une structure solidaire de l'aéronef, au moins un moteur électrique, au moins une hélice entraînée en rotation par le moteur électrique et configurée pour générer des efforts de poussée, un boîtier rigide configuré pour transmettre les efforts de poussée générés par l'hélice ainsi qu'une attache moteur reliant le boîtier et la structure, l'hélice présentant un axe de rotation définissant une direction longitudinale parallèle à l'axe de rotation, un plan longitudinal vertical passant par l'axe de rotation et vertical ainsi qu'une direction longitudinale et horizontale perpendiculaire au plan longitudinal vertical.

Selon l'invention, cette attache moteur comprend :
- des première et deuxième bielles transversales disposées de part et d'autre du plan longitudinal vertical et présentant chacune une première extrémité reliée par au moins une première articulation à la structure ainsi qu'une deuxième extrémité reliée par au moins une deuxième articulation au boîtier, chacune des première et deuxième articulations présentant un axe de pivotement sensiblement parallèle à l'axe de rotation,
- des première et deuxième bielles de poussée disposées de part et d'autre du plan longitudinal vertical et présentant une première extrémité reliée par une première liaison de bielle de poussée à la structure ainsi qu'une deuxième extrémité reliée par une deuxième liaison de bielle de poussée au boîtier, pour chacune des première et deuxième bielles de poussée, les première et deuxième liaisons de bielle de poussée étant écartées l'une de l'autre selon la direction longitudinale,
- une butée longitudinale configurée pour limiter un déplacement du boîtier par rapport à la structure selon au moins la direction longitudinale.

Cette attache moteur permet d'obtenir une liaison isostatique entre le boîtier et la structure. Les deuxièmes articulations reliant les bielles transversales et le boîtier ainsi que les deuxièmes liaisons de bielle de poussée reliant les bielles de poussée et le boîtier étant positionnées dans un même plan transversal ou dans des plans transversaux très proches, cette attache moteur convient pour les boîtiers compacts selon la direction longitudinale. Selon une autre caractéristique, la butée longitudinale comprend un doigt solidaire d'un premier élément parmi le boîtier et la structure ainsi qu'un logement configuré pour loger au moins partiellement le doigt, prévu au niveau d'un deuxième élément, différent du premier élément parmi le boîtier et la structure, le doigt présentant une première dimension mesurée selon la direction longitudinale et une deuxième dimension mesurée selon la direction transversale horizontale.

Selon un premier mode de réalisation, chaque première ou deuxième bielle transversale comprend une seule première articulation la reliant à la structure et une seule deuxième articulation la reliant au boîtier. En complément, la butée longitudinale est configurée pour immobiliser le boîtier par rapport à la structure selon la direction longitudinale et selon la direction transversale horizontale.

Selon une autre caractéristique, le logement présente une dimension longitudinale, mesurée selon la direction longitudinale, sensiblement égale à la première dimension du doigt et une dimension transversale, mesurée selon la direction transversale horizontale, sensiblement égale à la deuxième dimension du doigt.

Selon un deuxième mode de réalisation, la première bielle transversale comprend une seule première articulation la reliant à la structure ainsi qu'une seule deuxième articulation la reliant au boîtier, la deuxième bielle transversale comprenant une première articulation la reliant à la structure, une deuxième articulation la reliant au boîtier et une troisième articulation la reliant à la structure ou au boîtier. En complément, la butée longitudinale est configurée pour immobiliser le boîtier par rapport à la structure selon la direction longitudinale et permettre au boîtier de se translater par rapport à la structure selon la direction transversale horizontale. Selon une autre caractéristique, le logement présente une dimension longitudinale, mesurée selon la direction longitudinale, sensiblement égale à la première dimension du doigt et une dimension transversale, mesurée selon la direction transversale horizontale, supérieure à la deuxième dimension du doigt.

Selon une autre caractéristique, l'attache moteur comprend un système de limitation de propagation des vibrations entre le boîtier et la structure comportant au moins une interface élastique intercalée entre le doigt et au moins une paroi verticale délimitant le logement. Cette interface élastique est un manchon positionné autour du doigt.

Selon une autre caractéristique, l'attache moteur comprend un palonnier auquel sont reliées les premières extrémités des première et deuxième bielles de poussée par les premières liaisons de bielle de poussée ainsi qu'une liaison palonnier, reliant le palonnier et la structure, comportant un axe de pivotement positionné dans le plan longitudinal vertical, approximativement vertical ou formant un angle inférieure à 20° par rapport à une direction vertica le.

Selon une autre caractéristique, l'attache moteur comprend des première et deuxième butées de palonnier disposées approximativement dans le prolongement des première et deuxième bielles de poussée et configurées pour limiter le mouvement de rotation du palonnier autour de l'axe de pivotement de la liaison palonnier et/ou limiter la propagation de vibrations entre le boîtier et la structure.

Selon une autre caractéristique, le palonnier comprend au moins une face arrière sensiblement verticale qui s'étend de part et d'autre du plan longitudinal vertical et la structure comprend, pour chaque face arrière, une face avant sensiblement parallèle à la face arrière, chaque première ou deuxième butée de palonnier étant intercalée entre une face arrière et une face avant.

Selon une autre caractéristique, chacune des première et deuxième butées de palonnier est séparée de la face arrière ou de la face avant correspondante d'une distance de débattement, chacune des première et deuxième butées de palonnier étant réglable pour ajuster la distance de débattement et/ou la compression des première et deuxième butées de palonnier.

Selon une autre caractéristique, les deuxièmes liaisons de bielle de poussée sont disposées de manière symétrique par rapport au plan longitudinal vertical, les axes de pivotement des deuxièmes liaisons de bielle de poussée étant alignés.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une représentation schématique en perspective d'un aéronef illustrant un mode de réalisation,
- La figure 2 est une représentation schématique latérale d'un ensemble de propulsion illustrant un premier mode de réalisation de l'art antérieur,
- La figure 3 est une vue en perspective d'un ensemble de propulsion illustrant un deuxième mode de réalisation de l'art antérieur,
- La figure 4 est une vue latérale d'un ensemble de propulsion illustrant un premier mode de réalisation de l'invention,
- La figure 5 est une coupe transversale selon le plan V-V de la figure 4 d'une partie d'une attache moteur illustrant un mode de réalisation de l'invention,
- La figure 6 est une coupe longitudinale d'une partie d'une attache moteur intégrant une butée longitudinale illustrant un mode de réalisation de l'invention,
- La figure 7 est une coupe horizontale selon le plan VI-VI de la figure 6 d'une butée longitudinale illustrant une première configuration de l'invention,
- La figure 8 est une coupe horizontale selon le plan VI-VI de la figure 6 d'une butée longitudinale illustrant une deuxième configuration de l'invention,
- La figure 9 est une vue de dessus de l'ensemble de propulsion visible sur la figure 4,
- La figure 10 est une vue latérale d'un ensemble de propulsion illustrant un deuxième mode de réalisation de l'invention,
- La figure 11 est une coupe transversale selon le plan XI-XI de la figure 10 d'une partie d'une attache moteur illustrant un mode de réalisation de l'invention,
- La figure 12 est une vue de dessus d'une butée longitudinale d'une attache moteur illustrant un mode de réalisation de l'invention,
- La figure 13 est une vue de dessus d'une partie arrière d'une attache moteur illustrant un mode de réalisation de l'invention,
- La figure 14 est une représentation schématique de dessus d'une attache moteur illustrant un mode de réalisation de l'invention, et
- La figure 15 est une représentation schématique latérale de l'attache moteur visible sur la figure 14.

Selon des modes de réalisation visibles sur les figures 4 à 15, un ensemble de propulsion 40 d'un aéronef comprend au moins un moteur 42, au moins une hélice 44 présentant un axe de rotation A44 ainsi qu'une boîte de vitesse 46 reliant le moteur 42 et l'hélice 44.

L'ensemble de propulsion est de type électrique et comprend au moins un moteur 42 électrique.

Selon un mode de réalisation, chaque moteur 42 comprend au moins une carcasse formant une enveloppe extérieure. Selon une configuration, cette carcasse n'est pas apte à transmettre d'efforts, comme des efforts de poussée générés par l'hélice 44 par exemple.

La boîte de vitesse 46 comprend un boîtier 48 formant une enveloppe extérieure. Selon une configuration, le boîtier 48 de la boîte de vitesse 46 est configuré pour transmettre des efforts, comme des efforts de poussée générés par l'hélice 44 par exemple.

Le boîtier 48 comprend une face arrière 48.1, positionnée approximativement dans un plan transversal, sur laquelle est rapporté et fixé au moins un moteur 42, ainsi qu'une face avant 48.2 traversée par un organe de transmission, comme un arbre assurant la transmission d'un mouvement de rotation entre le moteur 42 et l'hélice 44.

Contrairement à un moteur thermique ou à une turbomachine, les faces arrière et avant 48.1, 48.2 du boîtier 48 sont faiblement espacées selon la direction longitudinale X.

Un aéronef comprend au moins un tel ensemble de propulsion 40. Ce dernier comprend au moins une structure 50, également appelée structure primaire 50, reliant l'ensemble de propulsion 40 et la voilure (ou le fuselage) de l'aéronef ainsi qu'une structure secondaire formant une enveloppe aérodynamique enveloppant la structure primaire 50.

Selon un mode de réalisation, la structure primaire 50 comprend une structure en caisson allongée selon la direction longitudinale X. Toutefois, l'invention n'est pas limitée à ce mode de réalisation pour la structure primaire 50, qui peut être une structure en treillis ou toute autre structure. Selon une configuration, dans le cas d'un ensemble de propulsion 40 suspendu sous une voilure d'un aéronef, la structure primaire 50 est reliée à la structure de la voilure par une interface appelée attache voilure.

Cette structure primaire 50 est configurée pour transmettre des efforts entre l'ensemble de propulsion 40 et la structure de la voilure ou du fuselage de l'aéronef.

L'ensemble de propulsion 40 comprend également une interface, appelée par la suite attache moteur 52, reliant le boîtier 48 et la structure primaire 50.

Bien entendu, l'invention n'est pas limitée à ces modes de réalisation. Ainsi, l'ensemble de propulsion 40 pourrait être directement relié à la structure d'une voilure ou d'un fuselage d'un aéronef. Par conséquent, quel que soit le mode de réalisation, l'ensemble de propulsion 40 comprend une attache moteur 52 le reliant à une structure 50 d'un aéronef.

De plus, le boîtier 48 rigide n'est pas nécessairement celui de la boîte de vitesse 46. Quel que soit le mode de réalisation, l'ensemble de propulsion 40 comprend au moins un boîtier 48 rigide supportant l'hélice 44 et configuré pour transmettre des efforts, comme des efforts de poussée. Ce boîtier 48 peut faire partie du moteur 42, de la boîte de vitesse 46 ou de tout autre élément de l'ensemble de propulsion 40 via lequel transitent les efforts de poussée générés par l'ensemble de propulsion 40.

L'attache moteur 52 comprend des première et deuxième bielles de poussée 54, 54' disposées de part et d'autre du plan longitudinal vertical XZ, de manière symétrique. Chaque bielle de poussée 54, 54' présente une première extrémité 54.1 reliant la première ou deuxième bielle de poussée 54, 54' et la structure 50 par une première liaison de bielle de poussée 56.1 ainsi qu'une deuxième extrémité 54.2 reliant la première ou deuxième bielle de poussée 54, 54' et le boîtier 48 par une deuxième liaison de bielle de poussée 56.2.

Selon un mode de réalisation, pour chaque bielle de poussée 54, 54', les première et deuxième liaisons de bielle de poussée 56.1, 56.2 sont les plus espacées possible selon la direction longitudinale X.

Selon une configuration, les deuxièmes liaisons de bielle de poussée 56.2 sont disposées de manière symétrique par rapport au plan longitudinal vertical XZ et comprennent chacune un axe de pivotement A56.2 sensiblement parallèle à la direction transversale horizontale Y. Selon un agencement, les axes de pivotement A56.2 des deuxièmes liaisons de bielle de poussée 56.2 sont alignés. Ils sont généralement sécants avec l'axe de rotation A44 de l'hélice 44.

Selon une configuration, les deuxièmes liaisons de bielle de poussée 56.2 sont rotulées.

Selon un premier mode de réalisation visible sur la figure 4, les premières liaisons de bielle de poussée 56.1 sont disposées de manière symétrique par rapport au plan longitudinal vertical XZ et comprennent chacune un axe de pivotement A56.1 sensiblement parallèle à la direction transversale horizontale Y. Selon un agencement, les axes de pivotement A56.1 des premières liaisons de bielle de poussée 56.1 sont alignés. Comme pour les deuxièmes liaisons de bielle de poussée 56.2, les premières liaisons de bielle de poussée 56.1 peuvent être rotulées. En variante, les axes de pivotement A56.1 pourraient être sensiblement verticaux ou former un faible angle, inférieur à 20°, avec la direction transversale verticale Z.

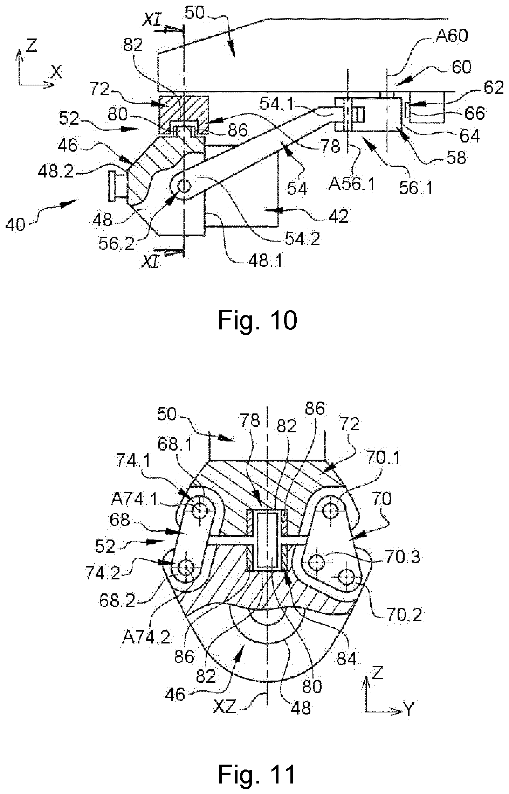

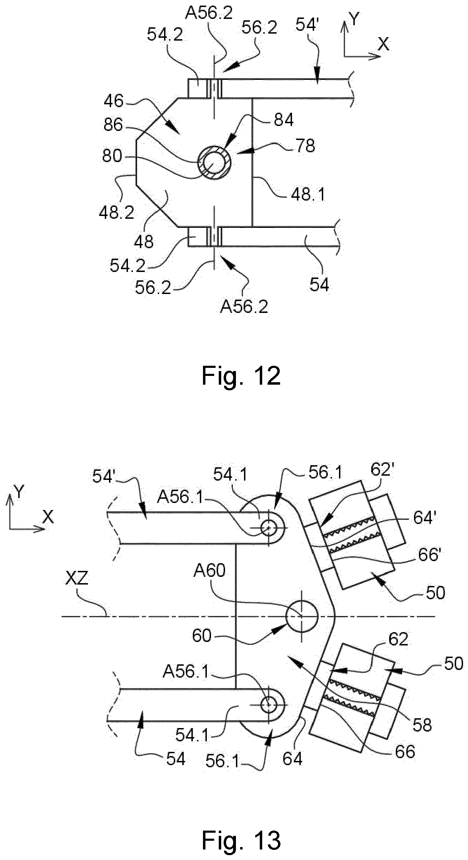

Selon un deuxième mode de réalisation visible sur les figures 10 et 13, l'attache moteur 52 comprend un palonnier 58 intercalé entre les premières extrémités 54.1 des première et deuxième bielles de poussée 54, 54' et la structure 50.

Selon ce deuxième mode de réalisation, les premières extrémités 54.1 des première et deuxième bielles de poussée 54, 54' sont chacune reliées au palonnier 58 par une première liaison de bielle de poussée 56.1. Comme pour le premier mode de réalisation, les premières liaisons de bielle de poussée 56.1 sont disposées de manière symétrique par rapport au plan longitudinal vertical XZ et comprennent chacune un axe de pivotement A56.1 qui est vertical ou forme un faible angle, inférieur à 20°, avec la direction transversale verticale Z. En variante, les axes de pivotement A56.1 pourraient être parallèles à la direction transversale horizontale Y et alignés.

L'attache moteur 52 comprend également une liaison palonnier 60, reliant le palonnier 58 et la structure 50, qui comprend un axe de pivotement A60 positionné dans le plan longitudinal vertical XZ, approximativement vertical ou formant un faible angle, inférieur à 20°, avec la direction transversale verticale Z. L'axe de pivotement A60 de la liaison palonnier 60 est situé à équidistance des premières liaisons de bielle de poussée 56.1.

Selon un agencement visible sur la figure 13, l'attache moteur 52 comprend des première et deuxième butées de palonnier 62, 62' disposées approximativement dans le prolongement des première et deuxième bielles de poussée 54, 54' et configurées pour limiter le mouvement de rotation du palonnier 58 autour de l'axe de pivotement A60 de la liaison palonnier 60 et/ou limiter la propagation de vibrations entre le boîtier 48 et la structure 50. Le palonnier 58 comprend au moins une face arrière 64 sensiblement verticale qui s'étend de part et d'autre du plan longitudinal vertical XZ. Selon un agencement, le palonnier 58 comprend deux faces arrière 64, 64', disposées de part et d'autre du plan longitudinal vertical XZ, formant entre elles un angle de l'ordre de 150°. En complément, la structure 50 comprend, pour chaque face arrière 64, 64', une face avant 66, 66' sensiblement parallèle à la face arrière 64, 64'. Chaque première ou deuxième butée de palonnier 62, 62' est intercalée entre une face arrière 64, 64' et une face avant 66, 66'. Selon un agencement, chaque première ou deuxième butée de palonnier 62, 62' est reliée à la face avant 66, 66' de la structure 50.

Les première et deuxième butées de palonnier 62, 62' sont les plus espacées possible selon la direction transversale horizontale Y et positionnées, si possible, au moins partiellement au droit des première et deuxième bielles de poussée 54, 54'.

Selon un mode de réalisation, chacune des première et deuxième butées de palonnier 62, 62' est une butée de compression légèrement déformable de manière élastique.

Chacune des première et deuxième butées de palonnier 62, 62' est séparée de la face arrière 64, 64' ou de la face avant 66, 66' correspondante d'une distance de débattement qui peut être nulle.

Selon une configuration, chacune des première et deuxième butées de palonnier 62, 62' est réglable pour ajuster la distance de débattement du palonnier 58 ou ajuster la compression des première et deuxième butées de palonnier 62, 62'.

L'attache moteur 52 comprend également des première et deuxième bielles transversales 68, 70, positionnées dans un plan transversal, de part et d'autre du plan longitudinal vertical XZ, reliant le boîtier 48 et la structure 50. Selon une configuration non représentée, les première et deuxième bielles transversales 68, 70 sont directement reliées à la structure 50.

Selon une autre configuration visible sur les figures 4 à 6, 10 et 11, l'attache moteur 52 comprend une poutre transversale 72, solidaire de la structure 50, à laquelle sont reliées les première et deuxième bielles transversales 68, 70.

Selon un mode de réalisation, au moins la première bielle transversale 68 comprend une première extrémité 68.1 reliée à la structure 50, directement ou indirectement via la poutre transversale 72, par une première articulation 74.1 ainsi qu'une deuxième extrémité 68.2 reliée au boîtier 48 par une deuxième articulation 74.2.

Les première et deuxième articulations 74.1, 74.2 comprennent chacune un axe de pivotement A74.1, A74.2 sensiblement parallèle à la direction longitudinale X. Ainsi, les axes de pivotement A74.1, A74.2 des première et deuxième articulations 74.1, 74.2 sont sensiblement parallèles entre eux.

Selon un mode de réalisation non représenté, les première et deuxième bielles transversales 68, 70 sont reliées chacune à la structure 50, directement ou indirectement via la poutre transversale 72, par une première articulation 74.1 ainsi qu'une deuxième extrémité 68.2 reliée au boîtier 48 par une deuxième articulation 74.2.

Selon un autre mode de réalisation, la deuxième bielle transversale 70 comprend une première extrémité 70.1 reliée à la structure 50, directement ou indirectement via la poutre transversale 72, par une première articulation 76.1, une deuxième extrémité 70.2 reliée au boîtier 48 par une deuxième articulation 76.2 ainsi qu'une zone intermédiaire 70.3 reliée à la structure 50, directement ou indirectement via la poutre transversale 72, ou au boîtier 48 par une troisième articulation 76.3 ; les première, deuxième et troisième articulations 76.1, 76.2, 76.3 n'étant pas alignées.

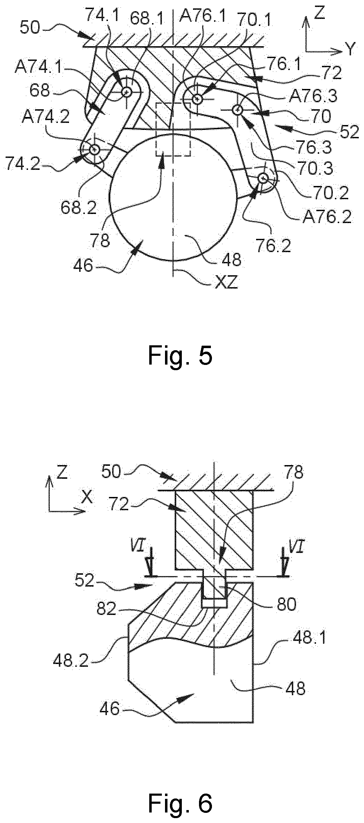

Selon une configuration visible sur la figure 5, la troisième articulation 76.3 relie la deuxième bielle transversale 70 et la poutre transversale 72.

Selon une autre configuration visible sur la figure 11, la troisième articulation 76.3 relie la deuxième bielle transversale 70 et le boîtier 48.

Chacune des première, deuxième et troisième articulations 76.1, 76.2, 76.3 comprend un axe de pivotement A76.1, A76.2, A76.3 sensiblement parallèle à la direction longitudinale X. Ainsi, les axes de pivotement A76.1, A76.2, A76.3 des première, deuxième et troisième articulations 76.1, 76.2, 76.3 sont parallèles entre eux.

Quel que soit le mode de réalisation, chacune des première et deuxième bielles transversales 68, 70 présente une première extrémité 68.1, 70.1 reliée par au moins une première articulation 74.1, 76.1 à la structure 50, directement ou indirectement par l'intermédiaire d'une poutre transversale 72, ainsi qu'une deuxième extrémité 68.2, 70.2 reliée par au moins une deuxième articulation 74.2, 76.2 au boîtier 48.

Selon un agencement, au moins une articulation parmi les première, deuxième et troisième articulations 74.1, 74.2, 76.1, 76.2, 76.3 des première et deuxième bielles transversales 68, 70 peut être rotulée.

Selon un mode de réalisation, pour chaque première articulation 74.1, 76.1 des première et deuxième bielles transversales 68, 70, la poutre transversale 72 comprend une chape pourvue de deux branches entre lesquelles est positionnée la première ou deuxième bielle transversale 68, 70. En complément, pour chaque deuxième articulation 74.2, 76.2 des première et deuxième bielles transversales 68, 70, le boîtier 48 comprend une chape pourvue de deux branches entre lesquelles est positionnée la première ou deuxième bielle transversale 68, 70. L'attache moteur 52 comprend également au moins une butée longitudinale 78, intercalée entre le boîtier 48 et la structure 50 (ou la poutre transversale 72), configurée pour limiter un déplacement selon au moins la direction longitudinale X du boîtier 48 par rapport à la structure 50.

Cette butée longitudinale 78 comprend un doigt 80 solidaire d'un premier élément parmi le boîtier 48 et la structure 50 (directement ou indirectement via la poutre transversale 72) ainsi qu'un logement 82 configuré pour loger au moins partiellement le doigt 80, prévu au niveau d'un deuxième élément, différent du premier élément parmi le boîtier 48 et la structure 50 (directement ou indirectement via la poutre transversale 72).

Selon une configuration visible sur la figure 6, le doigt 80 est solidaire de la poutre transversale 72 et le logement 82 est prévu au niveau du boîtier 48.

Selon une autre configuration visible sur la figure 10, le doigt 80 est solidaire du boîtier 48 et le logement 82 est prévu au niveau de la poutre transversale 72.

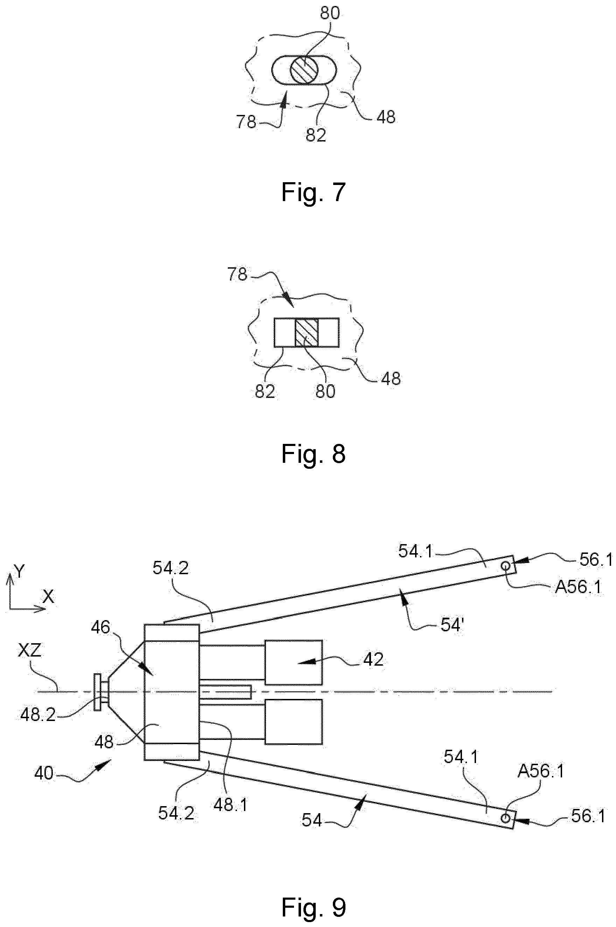

Selon un mode de réalisation, le doigt 80 présente une première dimension mesurée selon la direction longitudinale X et une deuxième dimension mesurée selon la direction transversale horizontale Y. Selon une première variante visible sur la figure 7, le doigt 80 a une section circulaire. Selon une deuxième variante visible sur la figure 8, le doigt 80 a une section carrée ou rectangulaire.

Selon une première configuration, la première bielle transversale 68 comprend deux articulations 74.1, 74.2 et la deuxième bielle transversale 70 comprend trois articulations 76.1, 76.2, 76.3. Selon cette première configuration, la butée longitudinale 78 est configurée pour immobiliser le boîtier 48 par rapport à la structure 50 selon la direction longitudinale X et permettre au boîtier 48 de se translater par rapport à la structure 50 selon la direction transversale horizontale Y. Comme illustré sur les figures 7 et 8, le logement 82 présente une dimension longitudinale, mesurée selon la direction longitudinale X, sensiblement égale à la première dimension du doigt 80 et une dimension transversale, mesurée selon la direction transversale horizontale Y, largement supérieure à la deuxième dimension du doigt 80.

Selon cette première configuration, les bielles transversales 68, 70 permettent d'immobiliser le boîtier 48 par rapport à la structure 50 en translation selon l'axe transversal horizontale Y et selon l'axe transversal vertical Z et en rotation autour de l'axe longitudinal X. La butée longitudinale 78 permet d'immobiliser le boîtier 48 par rapport à la structure 50 en translation selon l'axe longitudinal X. La butée longitudinale 78 et les bielles de poussée 54, 54' permettent d'immobiliser le boîtier 48 par rapport à la structure 50 en rotation autour de l'axe transversal horizontal Y. Enfin, les bielles de poussée 54, 54' permettent d'immobiliser le boîtier 48 par rapport à la structure 50 en rotation autour de l'axe transversal vertical Z.

Selon une deuxième configuration, les première et deuxième bielles transversales 68, 70 comprennent chacune seulement deux articulations 74.1, 74.2, 76.1, 76.2. Selon cette deuxième configuration, la butée longitudinale 78 est configurée pour immobiliser le boîtier 48 par rapport à la structure 50 selon la direction longitudinale X et selon la direction transversale horizontale Y. A cet effet, le logement 82 présente une dimension longitudinale, mesurée selon la direction longitudinale X, sensiblement égale à la première dimension du doigt 80 et une dimension transversale, mesurée selon la direction transversale horizontale Y, sensiblement égale à la deuxième dimension du doigt 80.

Selon cette deuxième configuration, les bielles transversales 68, 70 permettent d'immobiliser le boîtier 48 par rapport à la structure 50 en translation selon l'axe transversal vertical Z et en rotation autour de l'axe longitudinal X. La butée longitudinale 78 permet d'immobiliser le boîtier 48 par rapport à la structure 50 en translation selon l'axe longitudinal X et l'axe transversal horizontal Y. La butée longitudinale 78 et les bielles de poussée 54, 54' permettent d'immobiliser le boîtier 48 par rapport à la structure 50 en rotation autour de l'axe transversal horizontal Y. Enfin, les bielles de poussée 54, 54' permettent d'immobiliser le boîtier 48 par rapport à la structure 50 en rotation autour de l'axe transversal vertical Z.

Quel que soit le mode de réalisation, l'attache moteur 52 permet d'obtenir une liaison isostatique. Cette attache moteur 52 comprend des articulations 56.2, 74.2, 76.2 au niveau du boîtier 48 qui sont positionnées dans un même plan transversal ou dans des plans transversaux très proches si bien que cette attache moteur 52 peut être utilisée pour des boîtiers 48 compacts selon la direction longitudinale X. Le fait que les articulations 74.1, 76.1 reliant les bielles transversales 74, 76 et la structure 50 soient les plus espacées possible des articulations 56.1 reliant les bielles de poussée 54, 54' et la structure 50 contribue à assurer une transmission des efforts (plus particulièrement des efforts de poussée) optimale.

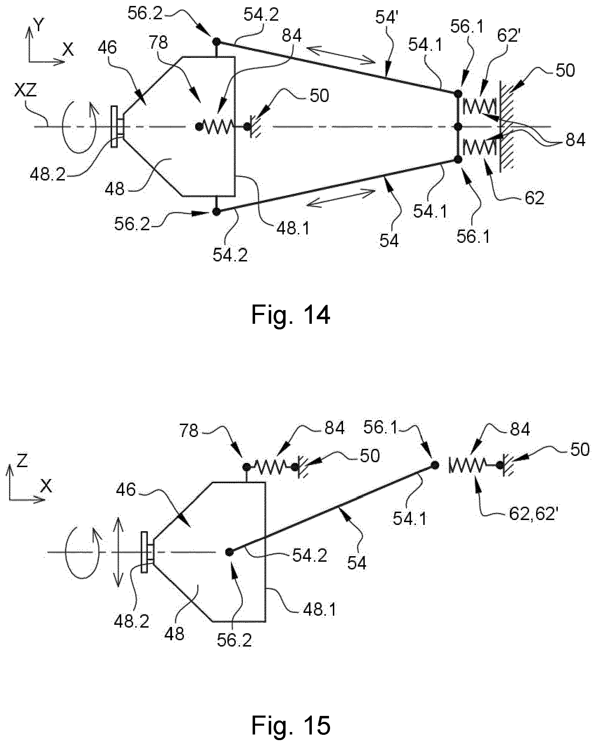

Selon un mode de réalisation représenté de manière schématique sur les figures 14 et 15, l'attache moteur 52 comprend un système de limitation de propagation des vibrations 84 entre le boîtier 48 et la structure 50.

Ce système de limitation de propagation des vibrations comprend les première et deuxième butées de palonnier 62, 62'. Il comprend également au moins une interface élastique 86 intercalée entre le doigt 80 et au moins une paroi verticale délimitant le logement 82 de la butée longitudinale 78.

Selon un mode de réalisation visible sur les figures 11 et 12, l'interface élastique 86 est un manchon positionné autour du doigt 80 et intercalé entre le doigt 80 et la paroi verticale délimitant le logement 82.

L'interface élastique 86 peut de déformer en compression de manière élastique et présente une dureté Shore adaptée pour transmettre les efforts tout en amortissant les vibrations.

Selon une configuration visible sur la figure 11, le doigt 80 est distinct de la poutre transversale 72 ainsi que du boîtier 48 et présente une première extrémité configurée pour se loger dans un premier logement prévu au niveau de la poutre transversale 72 et une deuxième extrémité configurée pour se loger dans un deuxième logement prévu au niveau du boîtier 48. Les première et deuxième extrémités du doigt 80 comprennent chacune une interface élastique 86 sous la forme d'un manchon entourant le doigt 80. Selon cette configuration, les logements recevant les première et deuxième extrémités du doigt 80 ont des dimensions configurées pour immobiliser le doigt 80 selon la direction longitudinale X et selon la direction transversale et horizontale Y par rapport à la structure 50 et au boîtier 48. Selon cette configuration, les première et deuxième bielles transversales 68, 70 comprennent chacune seulement deux articulations 74.1, 74.2.

## Revendications

1. Ensemble de propulsion d'un aéronef comportant une structure (50) solidaire de l'aéronef, au moins un moteur électrique (42), au moins une hélice (44) entraînée en rotation par le moteur électrique (42) et configurée pour générer des efforts de poussée, un boîtier (48) rigide configuré pour transmettre les efforts de poussée générés par l'hélice (44) ainsi qu'une attache moteur (52) reliant le boîtier (48) et la structure (50), l'hélice (44) qui présente un axe de rotation (A44) définissant une direction longitudinale (X) parallèle à l'axe de rotation (A44), un plan longitudinal vertical (XZ) passant par l'axe de rotation (A44) et vertical ainsi qu'une direction longitudinale et horizontale (Y) perpendiculaire au plan longitudinal vertical (XZ); l'attache moteur (52) comprenant:
- des première et deuxième bielles transversales (68, 70) disposées de part et d'autre du plan longitudinal vertical (XZ) et présentant chacune une première extrémité (68.1, 70.1) reliée par au moins une première articulation (74.1, 76.1) à la structure (50) ainsi qu'une deuxième extrémité (68.2, 70.2) reliée par au moins une deuxième articulation (74.2, 76.2) au boîtier (48), chacune des première et deuxième articulations (74.1, 74.2, 76.1, 76.2) présentant un axe de pivotement (A74.1, A74.2, A76.1, A76.2) sensiblement parallèle à l'axe de rotation (A44), **caractérisé en ce que** l'attache moteur (52) comprend aussi:
- des première et deuxième bielles de poussée (54, 54') disposées de part et d'autre du plan longitudinal vertical (XZ) et présentant une première extrémité (54.1) reliée par une première liaison de bielle de poussée (56.1) à la structure (50) ainsi qu'une deuxième extrémité (54.2) reliée par une deuxième liaison de bielle de poussée (56.2) au boîtier (48), pour chacune des première et deuxième bielles de poussée (54, 54'), les première et deuxième liaisons de bielle de poussée (56.1, 56.2) étant écartées l'une de l'autre selon la direction longitudinale (X),
- une butée longitudinale (78) configurée pour limiter un déplacement du boîtier (48) par rapport à la structure (50) selon au moins la direction longitudinale (X).

2. Ensemble de propulsion selon la revendication 1, **caractérisé en ce que** la butée longitudinale (78) comprend un doigt (80) solidaire d'un premier élément parmi le boîtier (48) et la structure (50) ainsi qu'un logement (82) configuré pour loger au moins partiellement le doigt (80) prévu au niveau d'un deuxième élément, différent du premier élément parmi le boîtier (48) et la structure (50), le doigt (80) présentant une première dimension mesurée selon la direction longitudinale (X) et une deuxième dimension mesurée selon la direction transversale horizontale (Y).

3. Ensemble de propulsion selon la revendication 1 ou 2, **caractérisé en ce que** chaque première ou deuxième bielle transversale (68, 70) comprend une seule première articulation (74.1, 76.1) la reliant à la structure (50) et une seule deuxième articulation (74.1, 76.1) la reliant au boîtier (48) et **en ce que** la butée longitudinale (78) est configurée pour immobiliser le boîtier (48) par rapport à la structure (50) selon la direction longitudinale (X) et selon la direction transversale horizontale (Y).

4. Ensemble de propulsion selon les revendications 2 et 3, **caractérisé en ce que** le logement (82) présente une dimension longitudinale, mesurée selon la direction longitudinale (X), sensiblement égale à la première dimension du doigt (80) et une dimension transversale, mesurée selon la direction transversale horizontale (Y), sensiblement égale à la deuxième dimension du doigt (80).

5. Ensemble de propulsion selon la revendication 1 ou 2, **caractérisé en ce que** la première bielle transversale (68) comprend une seule première articulation (74.1) la reliant à la structure (50) et une seule deuxième articulation (74.1) la reliant au boîtier (48), **en ce que** la deuxième bielle transversale (68) comprend une première articulation (76.1) la reliant à la structure (50), une deuxième articulation (76.2) la reliant au boîtier (48) ainsi qu'une troisième articulation (76.3) la reliant à la structure (50) ou au boîtier (48) et **en ce que** la butée longitudinale (78) est configurée pour immobiliser le boîtier (48) par rapport à la structure (50) selon la direction longitudinale (X) et permettre au boîtier (48) de se translater par rapport à la structure (50) selon la direction transversale horizontale (Y).

6. Ensemble de propulsion selon les revendications 2 et 5, **caractérisé en ce que** le logement (82) présente une dimension longitudinale, mesurée selon la direction longitudinale (X), sensiblement égale à la première dimension du doigt (80) et une dimension transversale, mesurée selon la direction transversale horizontale (Y), supérieure à la deuxième dimension du doigt (80).

7. Ensemble de propulsion selon l'une des revendications 2 à 6, **caractérisé en ce que** l'attache moteur (52) comprend un système de limitation de propagation des vibrations entre le boîtier (48) et la structure (50) comportant au moins une interface élastique (86) intercalée entre le doigt (80) et au moins une paroi verticale délimitant le logement (82).

8. Ensemble de propulsion selon la revendication précédente, **caractérisé en ce que** l'interface élastique (86) est un manchon positionné autour du doigt (80).

9. Ensemble de propulsion selon l'une des revendications précédentes, **caractérisé en ce que** l'attache moteur (52) comprend un palonnier (58) auquel sont reliées les premières extrémités (54.1) des première et deuxième bielles de poussée (54, 54') par les premières liaisons de bielle de poussée (56.1) ainsi qu'une liaison palonnier (60) reliant le palonnier (58) et la structure (50) et comportant un axe de pivotement (A60) positionné dans le plan longitudinal vertical (XZ), approximativement vertical ou formant un angle inférieure à 20° par rapport à une direction verticale.

10. Ensemble de propulsion selon la revendication précédente, **caractérisé en ce que** l'attache moteur (52) comprend des première et deuxième butées de palonnier (62, 62') disposées approximativement dans le prolongement des première et deuxième bielles de poussée (54, 54') et configurées pour limiter le mouvement de rotation du palonnier (58) autour de l'axe de pivotement (A60) de la liaison palonnier (60) et/ou limiter la propagation de vibrations entre le boîtier (48) et la structure (50).

11. Ensemble de propulsion selon la revendication précédente, **caractérisé en ce que** le palonnier (58) comprend au moins une face arrière (64, 64') sensiblement verticale qui s'étend de part et d'autre du plan longitudinal vertical (XZ) et **en ce que** la structure (50) comprend, pour chaque face arrière (64, 64'), une face avant (66, 66') sensiblement parallèle à la face arrière (64, 64'), chaque première ou deuxième butée de palonnier (62, 62') étant intercalée entre une face arrière (64, 64') et une face avant (66, 66').

12. Ensemble de propulsion selon la revendication précédente, **caractérisé en ce que** chacune des première et deuxième butées de palonnier (62, 62') est séparée de la face arrière (64, 64') ou de la face avant (66, 66') correspondante d'une distance de débattement et **en ce que** chacune des première et deuxième butées de palonnier (62, 62') est réglable pour ajuster la distance de débattement.

13. Ensemble de propulsion selon la revendication 11, **caractérisé en ce que** chacune des première et deuxième butées de palonnier (62, 62') est une butée de compression légèrement déformable de manière élastique et **en ce que** chacune des première et deuxième butées de palonnier (62, 62') est réglable pour ajuster la compression des première et deuxième butées de palonnier (62, 62').

14. Ensemble de propulsion selon l'une des revendications précédentes, **caractérisé en ce que** les deuxièmes liaisons de bielle de poussée (56.2) sont disposées de manière symétrique par rapport au plan longitudinal vertical (XZ), les axes de pivotement (A56.2) des deuxièmes liaisons de bielle de poussée (56.2) étant alignés.

15. Aéronef comprenant au moins un ensemble de propulsion selon l'une des revendications précédentes.

## Patentansprüche

1. Antriebsanordnung eines Flugzeugs, die eine mit dem Flugzeug fest verbundene Struktur (50), mindestens einen Elektromotor (42), mindestens einen Propeller (44), der durch den Elektromotor (42) drehangetrieben wird und dazu konfiguriert ist, Schubkräfte zu erzeugen, ein starres Gehäuse (48), das dazu konfiguriert ist, die durch den Propeller (44) erzeugten Schubkräfte zu übertragen, sowie eine Motorbefestigung (52), die das Gehäuse (48) und die Struktur (50) verbindet, umfasst, wobei der Propeller (44), der eine Drehachse (A44) aufweist, eine Längsrichtung (X) parallel zu der Drehachse (A44), eine vertikale Längsebene (XZ), die durch die Drehachse (A44) und vertikale Achse verläuft, sowie eine Längs- und horizontale Richtung (Y), die zu der vertikalen Längsebene (XZ) senkrecht ist, definiert; wobei die Motorbefestigung (52) Folgendes beinhaltet:
- eine erste und eine zweite Querstange (68, 70), die zu beiden Seiten der vertikalen Längsebene (XZ) angeordnet sind und jeweils ein erstes Ende (68.1, 70.1), das durch mindestens ein erstes Gelenk (74.1, 76.1) mit der Struktur (50) verbunden ist, sowie ein zweites Ende (68.2, 70.2), das durch mindestens ein zweites Gelenk (74.2, 76.2) mit dem Gehäuse (48) verbunden ist, aufweisen, wobei jedes von dem ersten und dem zweiten Gelenk (74.1, 74.2, 76.1, 76.2) eine Schwenkachse (A74.1, A74.2, A76.1, A76.2) aufweist, die im Wesentlichen parallel zu der Drehachse (A44) ist, **dadurch gekennzeichnet, dass** die Motorbefestigung (52) ferner Folgendes beinhaltet:
- eine erste und eine zweite Schubstange (54, 54'), die zu beiden Seiten der vertikalen Längsebene (XZ) angeordnet sind und ein erstes Ende (54.1), das durch eine erste Schubstangenverbindung (56.1) mit der Struktur (50) verbunden ist, sowie ein zweites Ende (54.2), das durch eine zweite Schubstangenverbindung (56.2) mit dem Gehäuse (48) verbunden ist, aufweisen, wobei für jede von der ersten und der zweiten Schubstange (54, 54') die erste und die zweite Schubstangenverbindung (56.1, 56.2) gemäß der Längsrichtung (X) voneinander beabstandet sind,
- einen Längsanschlag (78), der dazu konfiguriert ist, eine Verschiebung des Gehäuses (48) mit Bezug auf die Struktur (50) gemäß mindestens der Längsrichtung (X) zu begrenzen.

2. Antriebsanordnung nach Anspruch 1, **dadurch gekennzeichnet, dass** der Längsanschlag (78) einen Finger (80), der mit einem ersten Element von dem Gehäuse (48) und der Struktur (50) fest verbunden ist, sowie eine Aufnahme (82), die dazu konfiguriert ist, den Finger (80) mindestens teilweise aufzunehmen, und an einem zweiten Element, das sich von dem ersten Element unterscheidet, von dem Gehäuse (48) und der Struktur (50) vorgesehen ist, beinhaltet, wobei der Finger (80) eine erste Abmessung, die gemäß der Längsrichtung (X) gemessen wird, und eine zweite Abmessung, die gemäß der horizontalen Querrichtung (Y) gemessen wird, aufweist.

3. Antriebsanordnung nach Anspruch 1 oder 2, **dadurch gekennzeichnet, dass** jede erste oder zweite Querstange (68, 70) ein einziges erstes Gelenk (74.1, 76.1), das sie mit der Struktur (50) verbindet, und ein einziges zweites Gelenk (74.1, 76.1), das sie mit dem Gehäuse (48) verbindet, beinhaltet und dass der Längsanschlag (78) dazu konfiguriert ist, das Gehäuse (48) mit Bezug auf die Struktur (50) gemäß der Längsrichtung (X) und gemäß der horizontalen Querrichtung (Y) zu blockieren.

4. Antriebsanordnung nach den Ansprüchen 2 und 3, **dadurch gekennzeichnet, dass** die Aufnahme (82) eine Längsabmessung, die gemäß der Längsrichtung (X) gemessen wird und im Wesentlichen gleich der ersten Abmessung des Fingers (80) ist, und einer Querabmessung, die gemäß der horizontalen Querrichtung (Y) gemessen wird und im Wesentlichen gleich der zweiten Abmessung des Fingers (80) ist, aufweist.

5. Antriebsanordnung nach Anspruch 1 oder 2, **dadurch gekennzeichnet, dass** die erste Querstange (68) ein einziges erstes Gelenk (74.1), das sie mit der Struktur (50) verbindet, und ein einziges zweites Gelenk (74.1), das sie mit dem Gehäuse (48) verbindet, beinhaltet, dass die zweite Querstange (70) ein erstes Gelenk (76.1), das sie mit der Struktur (50) verbindet, ein zweites Gelenk (76.2), das sie mit dem Gehäuse (48) verbindet, sowie ein drittes Gelenk (76.3), das sie mit der Struktur (50) oder dem Gehäuse (48) verbindet, beinhaltet und dass der Längsanschlag (78) dazu konfiguriert ist, das Gehäuse (48) mit Bezug auf die Struktur (50) gemäß der Längsrichtung (X) zu blockieren und zu ermöglichen, dass sich das Gehäuse (48) mit Bezug auf die Struktur (50) gemäß der horizontalen Querrichtung (Y) translatorisch bewegt.

6. Antriebsanordnung nach den Ansprüchen 2 und 5, **dadurch gekennzeichnet, dass** die Aufnahme (82) eine Längsabmessung, die gemäß der Längsrichtung (X) gemessen wird und im Wesentlichen gleich der ersten Abmessung des Fingers (80) ist, und einer Querabmessung, die gemäß der horizontalen Querrichtung (Y) gemessen wird und größer als die zweite Abmessung des Fingers (80) ist, aufweist.

7. Antriebsanordnung nach einem der Ansprüche 2 bis 6, **dadurch gekennzeichnet, dass** die Motorbefestigung (52) ein System zur Begrenzung einer Ausbreitung der Schwingungen zwischen dem Gehäuse (48) und der Struktur (50) beinhaltet, das mindestens eine elastische Schnittstelle (86) umfasst, die zwischen dem Finger (80) und mindestens einer vertikalen Wand, die die Aufnahme (82) begrenzt, eingefügt ist.

8. Antriebsanordnung nach dem vorhergehenden Anspruch, **dadurch gekennzeichnet, dass** die elastische Schnittstelle (86) eine Hülse ist, die um den Finger (80) herum positioniert ist.

9. Antriebsanordnung nach einem der vorhergehenden Ansprüche, **dadurch gekennzeichnet, dass** die Motorbefestigung (52) eine Traverse (58), mit der die ersten Enden (54.1) der ersten und der zweiten Schubstange (54, 54') durch die ersten Schubstangenverbindungen (56.1) verbunden sind, sowie eine Traversenverbindung (60), die die Traverse (58) und die Struktur (50) verbindet und eine Schwenkachse (A60) umfasst, die in der vertikalen Längsebene (XZ) positioniert ist und ungefähr vertikal ist oder einen Winkel kleiner als 20° mit Bezug auf eine vertikale Richtung bildet, beinhaltet.

10. Antriebsanordnung nach dem vorhergehenden Anspruch, **dadurch gekennzeichnet, dass** die Motorbefestigung (52) einen ersten und einen zweiten Traversenanschlag (62, 62') beinhaltet, die ungefähr in der Verlängerung der ersten und der zweiten Schubstange (54, 54') angeordnet sind und dazu konfiguriert sind, die Drehbewegung der Traverse (58) um die Schwenkachse (A60) der Traversenverbindung (60) zu begrenzen und/oder die Ausbreitung von Schwingungen zwischen dem Gehäuse (48) und der Struktur (50) zu begrenzen.

11. Antriebsanordnung nach dem vorhergehenden Anspruch, **dadurch gekennzeichnet, dass** die Traverse (58) mindestens eine im Wesentlichen vertikale Rückseite (64, 64') beinhaltet, die sich zu beiden Seiten der vertikalen Längsebene (XZ) erstreckt, und dass die Struktur (50) für jede Rückseite (64, 64') eine Vorderseite (66, 66') beinhaltet, die zu der Rückseite (64, 64') im Wesentlichen parallel ist, wobei jeder erste oder zweite Traversenanschlag (62, 62') zwischen einer Rückseite (64, 64') und einer Vorderseite (66, 66') eingefügt ist.

12. Antriebsanordnung nach dem vorhergehenden Anspruch, **dadurch gekennzeichnet, dass** jeder von dem ersten und dem zweiten Traversenanschlag (62, 62') von der entsprechenden Rückseite (64, 64') oder Vorderseite (66, 66') um einen Bewegungsabstand getrennt ist und dass jeder von dem ersten und dem zweiten Traversenanschlag (62, 62') verstellbar ist, um den Bewegungsabstand einzustellen.

13. Antriebsanordnung nach Anspruch 11, **dadurch gekennzeichnet, dass** jeder von dem ersten und dem zweiten Traversenanschlag (62, 62') ein elastisch leicht verformbarer Kompressionsanschlag ist und dass jeder von dem ersten und dem zweiten Traversenanschlag (62, 62') verstellbar ist, um die Kompression des ersten und des zweiten Traversenanschlags (62, 62') einzustellen.

14. Antriebsanordnung nach einem der vorhergehenden Ansprüche, **dadurch gekennzeichnet, dass** die zweiten Schubstangenverbindungen (56.2) mit Bezug auf die vertikale Längsebene (XZ) symmetrisch angeordnet sind, wobei die Schwenkachsen (A56.2) der zweiten Schubstangenverbindungen (56.2) miteinander ausgerichtet sind.

15. Flugzeug, das mindestens eine Antriebsanordnung nach einem der vorhergehenden Ansprüche beinhaltet.

## Claims

1. Propulsion unit of an aircraft, comprising a structure (50) as one with the aircraft, at least one electric motor (42), at least one propeller (44) driven in rotation by the electric motor (42) and configured to generate thrusting forces, a rigid casing (48) configured to transmit the thrusting forces generated by the propeller (44) and an engine mount (52) connecting the casing (48) and the structure (50), the propeller (44) which has an axis of rotation (A44) defining a longitudinal direction (X) parallel to the axis of rotation (A44), a vertical longitudinal plane (XZ) passing through the axis of rotation (A44), which is vertical, and a longitudinal and horizontal direction (Y) perpendicular to the vertical longitudinal plane (XZ); the engine mount (52) comprising:
- first and second transverse link rods (68, 70) disposed on either side of the vertical longitudinal plane (XZ) and each having a first end (68.1, 70.1) connected by at least one first joint (74.1, 76.1) to the structure (50) and a second end (68.2, 70.2) connected by at least one second joint (74.2, 76.2) to the casing (48), each of the first and second joints (74.1, 74.2, 76.1, 76.2) having an axis of pivoting (A74.1, A74.2, A76.1, A76.2) substantially parallel to the axis of rotation (A44), **characterized in that** the engine mount (52) also comprises:
- first and second thrust rods (54, 54') disposed on either side of the vertical longitudinal plane (XZ) and having a first end (54.1) connected by a first thrust rod connection (56.1) to the structure (50) and a second end (54.2) connected by a second thrust rod connection (56.2) to the casing (48), for each of the first and second thrust rods (54, 54'), the first and second thrust rod connections (56.1, 56.2) being separated from one another in the longitudinal direction (X),
- a longitudinal end stop (78) configured to limit a movement of the casing (48) with respect to the structure (50) in at least the longitudinal direction (X).

2. Propulsion unit according to Claim 1, **characterized in that** the longitudinal end stop (78) comprises a finger (80) as one with a first element from among the casing (48) and the structure (50), and a housing (82) configured to at least partially house the finger (80) provided at a second element, different from the first element, from among the casing (48) and the structure (50), the finger (80) having a first dimension measured in the longitudinal direction (X) and a second dimension measured in the horizontal transverse direction (Y).

3. Propulsion unit according to Claim 1 or 2, **characterized in that** each first or second transverse link rod (68, 70) comprises a single first joint (74.1, 76.1) connecting it to the structure (50) and a single second joint (74.1, 76.1) connecting it to the casing (48) and **in that** the longitudinal end stop (78) is configured to immobilize the casing (48) with respect to the structure (50) in the longitudinal direction (X) and in the horizontal transverse direction (Y).

4. Propulsion unit according to Claims 2 and 3, **characterized in that** the housing (82) has a longitudinal dimension, measured in the longitudinal direction (X), substantially equal to the first dimension of the finger (80) and a transverse dimension, measured in the horizontal transverse direction (Y), substantially equal to the second dimension of the finger (80).

5. Propulsion unit according to Claim 1 or 2, **characterized in that** the first transverse link rod (68) comprises a single first joint (74.1) connecting it to the structure (50) and a single second joint (74.1) connecting it to the casing (48), **in that** the second transverse link rod (70) comprises a first joint (76.1) connecting it to the structure (50), a second joint (76.2) connecting it to the casing (48) and a third joint (76.3) connecting it to the structure (50) or to the casing (48), and **in that** the longitudinal end stop (78) is configured to immobilize the casing (48) with respect to the structure (50) in the longitudinal direction (X) and allow the casing (48) to move in translation with respect to the structure (50) in the horizontal transverse direction (Y).

6. Propulsion unit according to Claims 2 and 5, **characterized in that** the housing (82) has a longitudinal dimension, measured in the longitudinal direction (X), substantially equal to the first dimension of the finger (80) and a transverse dimension, measured in the horizontal transverse direction (Y), greater than the second dimension of the finger (80).

7. Propulsion unit according to one of Claims 2 to 6, **characterized in that** the engine mount (52) comprises a system for limiting the spread of vibrations between the casing (48) and the structure (50), comprising at least one elastic interface (86) interposed between the finger (80) and at least one vertical wall delimiting the housing (82).

8. Propulsion unit according to the preceding claim, **characterized in that** the elastic interface (86) is a sleeve positioned around the finger (80).

9. Propulsion unit according to one of the preceding claims, **characterized in that** the engine mount (52) comprises a whippletree (58) to which the first ends (54.1) of the first and second thrust rods (54, 54') are connected by the first thrust rod connections (56.1) and a whippletree connection (60) connecting the whippletree (58) and the structure (50) and comprising an axis of pivoting (A60) positioned in the vertical longitudinal plane (XZ) that is approximately vertical or that makes an angle of less than 20° with respect to a vertical direction.

10. Propulsion unit according to the preceding claim, **characterized in that** the engine mount (52) comprises first and second whippletree end stops (62, 62') disposed approximately in the continuation of the first and second thrust rods (54, 54') and configured to limit the rotational movement of the whippletree (58) about the axis of pivoting (A60) of the whippletree connection (60) and/or to limit the spread of vibrations between the casing (48) and the structure (50).

11. Propulsion unit according to the preceding claim, **characterized in that** the whippletree (58) comprises at least one substantially vertical rear face (64, 64') which extends on either side of the vertical longitudinal plane (XZ) and **in that** the structure (50) comprises, for each rear face (64, 64'), a front face (66, 66') substantially parallel to the rear face (64, 64'), each first or second whippletree end stop (62, 62') being interposed between a rear face (64, 64') and a front face (66, 66').

12. Propulsion unit according to the preceding claim, **characterized in that** each of the first and second whippletree end stops (62, 62') is separated from the rear face (64, 64') or front face (66, 66') corresponding thereto by a travel and **in that** each of the first and second whippletree end stops (62, 62') is adjustable so as to adjust the travel.

13. Propulsion unit according to Claim 11, **characterized in that** each of the first and second whippletree end stops (62, 62') is a slightly elastically deformable compression end stop and **in that** each of the first and second whippletree end stops (62, 62') is adjustable so as to adjust the compression of the first and second whippletree end stops (62, 62').

14. Propulsion unit according to one of the preceding claims, **characterized in that** the second thrust rod connections (56.2) are disposed symmetrically with respect to the vertical longitudinal plane (XZ), the axes of pivoting (A56.2) of the second thrust rod connections (56.2) being aligned.

15. Aircraft comprising at least one propulsion unit according to one of the preceding claims.
